# EUROPEAN PATENT APPLICATION

(11) **EP 4 489 129 A1**
(43) Date of publication of application: **08.01.2025**
(21) Application number: 23759698.6
(22) Date of filing: 09.02.2023
(51) Int. Cl.: H01M 4/525, C01G 53/00, H01M 4/13, H01M 4/36, H01M 4/505

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(30) Priority: 28.02.2022 JP 2022030455
(71) Applicant: Panasonic Intellectual Property Management Co., Ltd., Kadoma-shi, Osaka 571-0057 (JP)
(72) Inventor: SAITO, Motoharu, Kadoma-shi, Osaka 571-0057 (JP); OGASAWARA, Takeshi, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2023/004313
(87) International publication number: WO 2023/162694

(57) **Abstract**

Provided is a positive electrode active material which is for a non-aqueous electrolyte secondary battery and with which a non-aqueous electrolyte secondary battery with cost reduction, high capacity, and high efficiency can be achieved. A positive electrode active material included in this non-aqueous electrolyte secondary battery includes a lithium-transition metal composite oxide containing at least 90 mol% of Ni and Mn with respect to the total molar amount of metal elements other than Li. The lithium-transition metal composite oxide is composed of single particles and secondary particles formed through the aggregation of 2 to 1,000 single particles. The average particle size of the single particles is 0.5-5 µm. A boron compound containing a surface-modified layer is formed on the surface of the lithium-transition metal composite oxide, and the surface-modified layer has a thickness of at most 100 nm.

## Description

### TECHNICAL FIELD

The present disclosure relates to a positive electrode active material for a non-aqueous electrolyte secondary battery, and a non-aqueous electrolyte secondary battery.

### BACKGROUND ART

For a positive electrode active material of a lithium-ion secondary battery being a non-aqueous electrolyte secondary battery, a lithium-transition metal composite oxide is used. For example, Patent Literature 1 discloses a method of improving safety and storage characteristics at high temperature of the lithium-ion secondary battery by using: an NCM-based lithium-transition metal composite oxide being of large particles coated with a metal oxide; and an NCM-based lithium-transition metal composite oxide being of small particles coated with lithium triborate.

### CITATION LIST

### PATENT LITERATURE

PATENT LITERATURE 1: Japanese Patent No. 6862503

### SUMMARY

However, the NCM-based oxide contains Co, which is expensive, and a challenge is cost reduction in the art described in Patent Literature 1. In addition, improvement of a battery capacity and charge-discharge efficiency has been desired in recent years, but the art described in Patent Literature 1 does not consider the battery capacity and the charge-discharge efficiency, and still has room for improvement.

It is an advantage of the present disclosure to provide a positive electrode active material for a non-aqueous electrolyte secondary battery that can reduce a cost, increase the capacity, and increase the efficiency of the non-aqueous electrolyte secondary battery.

A positive electrode active material for a non-aqueous electrolyte secondary battery of an aspect of the present disclosure includes a lithium-transition metal composite oxide containing greater than or equal to 90 mol% of Ni and Mn relative to a total molar amount of metal elements excluding Li, wherein the lithium-transition metal composite oxide is constituted of at least one of the group consisting of single particles and secondary particles each formed by aggregation of greater than or equal to 2 and less than or equal to 1000 of the single particles, an average particle diameter of the single particles is greater than or equal to 0.5 µm and less than or equal to 5 µm, a surface-modifying layer including a boron compound is formed on a surface of the lithium-transition metal composite oxide, and a thickness of the surface-modifying layer is less than or equal to 100 nm. Since having good voltage-resistant characteristics, the single particles (which refer to primary particles with greater than or equal to 0.5 µm) exhibit good cycle characteristics even at a high potential of greater than or equal to 4.3 V (lithium-standard potential). However, it is difficult to inhibit side reactions such as decomposition of an electrolyte liquid at the high potential, and charge-discharge efficiency is deteriorated.

A non-aqueous electrolyte secondary battery of an aspect of the present disclosure comprises: a positive electrode including the above positive electrode active material; a negative electrode; and a non-aqueous electrolyte.

According to the positive electrode active material for a non-aqueous electrolyte secondary battery of an aspect of the present disclosure, the non-aqueous electrolyte secondary battery having improved battery capacity and charge-discharge efficiency can be provided at a reduced cost.

### BRIEF DESCRIPTION OF DRAWINGS

FIG. 1 is an axial sectional view of a non-aqueous electrolyte secondary battery of an example of an embodiment.
FIG. 2 is a schematical sectional view of a test cell produced in Examples and Comparative Examples.
FIG. 3 is SEM images of positive electrode active materials of Examples 7 and 8 and Comparative Examples 3 and 4.
FIG. 4 is an SEM image of a positive electrode active material of Example 10.
FIG. 5 is an SEM image of a positive electrode active material of Example 1.
FIG. 6 is an SEM image of a positive electrode active material of Example 11.
FIG. 7 is an SEM image of a positive electrode active material of Example A1.
FIG. 8 is SEM images of positive electrode active materials of Examples A2, A3, and A4.

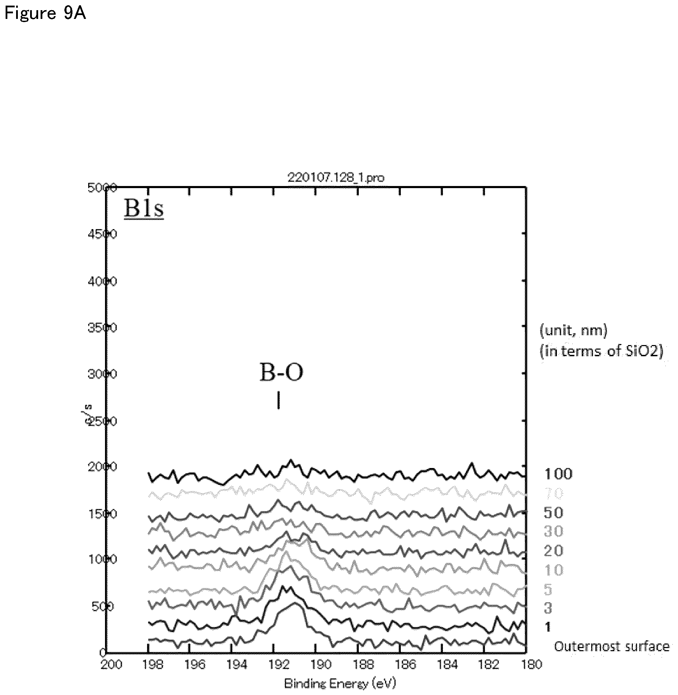

FIG. 9A is an XPS spectrum indicating a state of B in a positive electrode active material produced in Example 4.

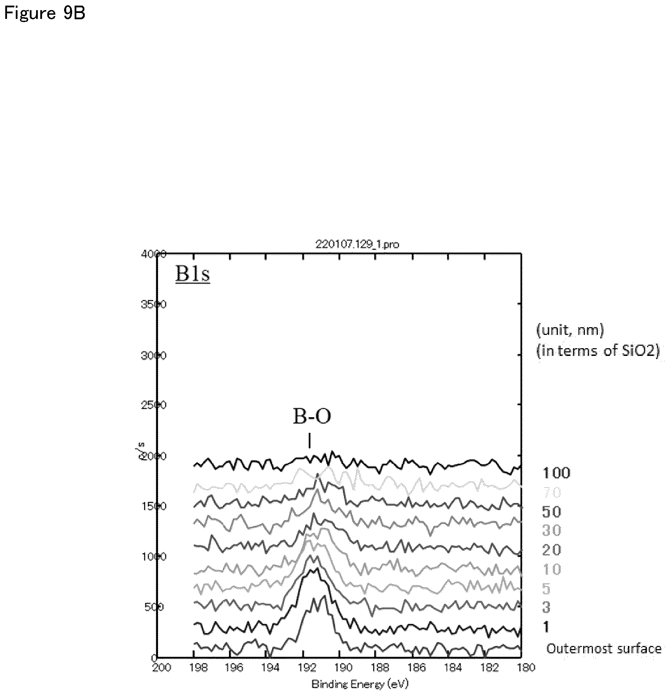

FIG. 9B is an XPS spectrum indicating a state of B in a positive electrode active material produced in Example 5.

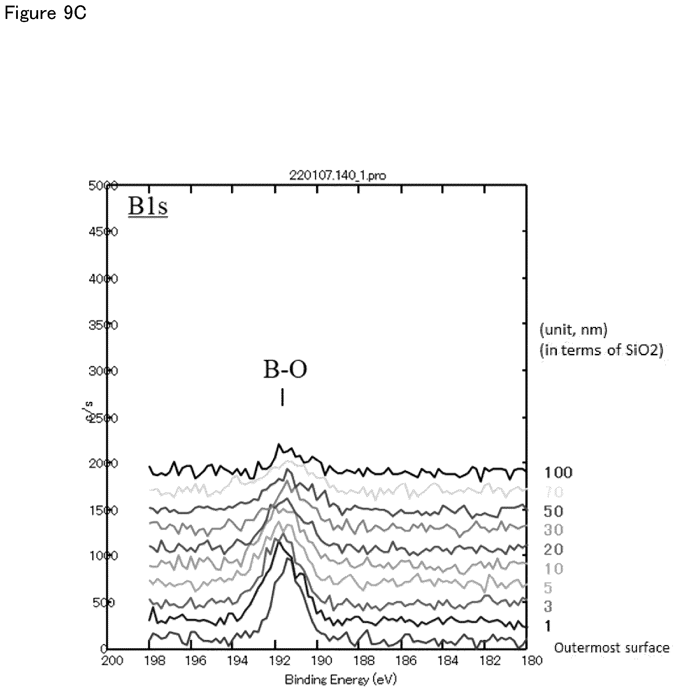

FIG. 9C is an XPS spectrum indicating a state of B in a positive electrode active material produced in Comparative Example 1.

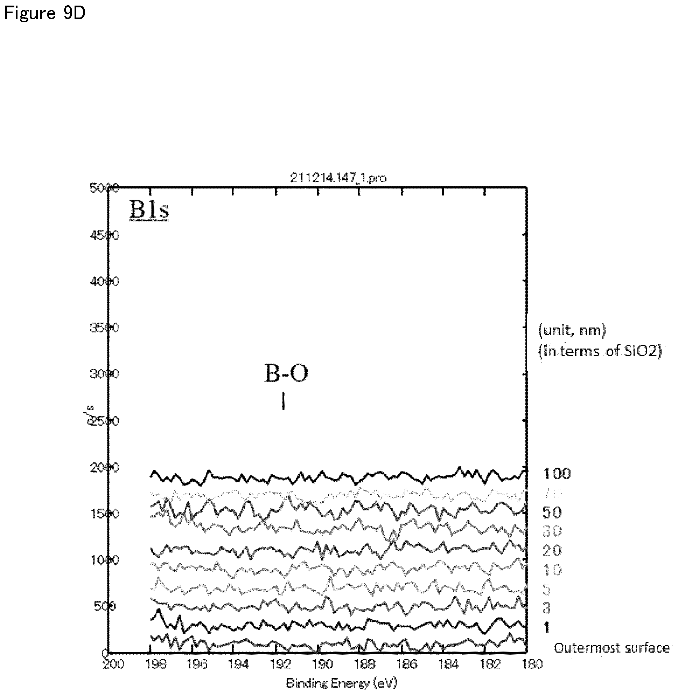

FIG. 9D is an XPS spectrum indicating a state of B in a positive electrode active material produced in Comparative Example 2.

### DESCRIPTION OF EMBODIMENTS

In the non-aqueous electrolyte secondary battery, observed is a phenomenon that some Li ions transferred from a positive electrode to a negative electrode during charge remain absorbed in a negative electrode active material and not released from the negative electrode during discharge to deteriorate charge-discharge efficiency of the battery. As increasing a capacity of the battery in recent years, improvement of the charge-discharge efficiency has been desired. In addition, cost reduction of the non-aqueous electrolyte secondary battery has also been desired, and a positive electrode active material preferably contains Ni and Mn, which are relatively inexpensive, as main components.

The present inventors have made intensive investigation to solve the above problem, and consequently found that the charge-discharge efficiency of the battery is improved by setting constitution of the lithium-transition metal composite oxide containing Ni and Mn as main components to single particles with a predetermined average particle diameter or the like, and forming a surface-modifying layer including a boron compound on a surface of the lithium-transition metal composite oxide. The present inventors have made further investigation, and found that a too thick surface-modifying layer improves the charge-discharge efficiency but deteriorates both the charge capacity and the discharge capacity. When the thickness of the surface-modifying layer is within the predetermined range, both the battery capacity and the charge-discharge efficiency can be achieved.

Hereinafter, an example of the embodiment of a non-aqueous electrolyte secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like. The exterior may be a pouch composed of laminated sheets including a metal layer and a resin layer. The description " a numerical value (A) to a numerical value (B)" herein means greater than or equal to the value (A) and less than or equal to the value (B).

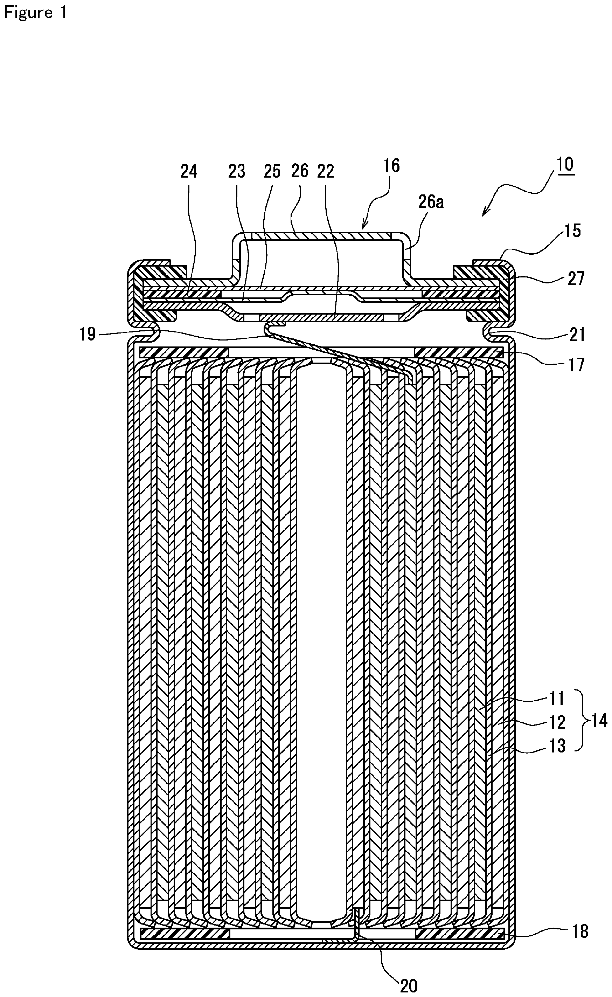

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An upper end of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided on an outer end of winding, the negative electrode lead 20 extends through an outside of the insulating plate 18 toward the bottom side of the exterior 15, and welded with a bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13, and the non-aqueous electrolyte, which constitute the electrode assembly 14, particularly the positive electrode 11, will be described in detail.

### [Positive Electrode]

The positive electrode 11 has a positive electrode current collector and a positive electrode mixture layer formed on a surface of the positive electrode current collector. The positive electrode mixture layer is preferably formed on both surfaces of the positive electrode current collector. For the positive electrode current collector, a foil of a metal stable within a potential range of the positive electrode 11, such as aluminum and an aluminum alloy, a film in which such a metal is disposed on a surface layer, or the like may be used. The positive electrode mixture layer includes, for example, a positive electrode active material, a conductive agent, a binder, and the like. A thickness of the positive electrode mixture layer is, for example, greater than or equal to 10 µm and less than or equal to 150 µm on one side of the positive electrode current collector. The positive electrode 11 is produced by, for example, applying a positive electrode mixture slurry including the positive electrode active material, the conductive agent, and the binder on the surface of the positive electrode current collector, and drying and then rolling the coating film to form the positive electrode mixture layer on both the surfaces of the positive electrode current collector.

Examples of the conductive agent included in the positive electrode mixture layer may include carbon-based particles such as carbon black (CB), acetylene black (AB), Ketjenblack, carbon nanotube (CNT), graphene, and graphite. These may be used singly, or in combination of two or more. A content rate of the conductive agent is, for example, greater than or equal to 0.1 mass% and less than or equal to 5.0 mass% relative to 100 parts by mass of the positive electrode active material.

Examples of the binder included in the positive electrode mixture layer may include fluororesins such as polytetrafluoroethylene (PTFE) and polyvinylidene fluoride (PVdF), polyacrylonitrile (PAN), polyimides, acrylic resins, and polyolefins. With these resins, cellulose derivatives such as carboxymethylcellulose (CMC) or a salt thereof, polyethylene oxide (PEO), and the like may be used in combination. A content rate of the binder is, for example, greater than or equal to 0.1 mass% and less than or equal to 5.0 mass% relative to 100 parts by mass of the positive electrode active material.

The positive electrode active material included in the positive electrode mixture layer includes a lithium-transition metal composite oxide. A surface-modifying layer including a boron compound is formed on the surface of the lithium-transition metal composite oxide. Forming the surface-modifying layer including the boron compound on the surface of the lithium-transition metal composite oxide having constitution described later remarkably improves the charge-discharge efficiency. It is presumed that the boron compound inhibits decomposition of the electrolyte liquid, and enhances exchange of Li ions between the non-aqueous electrolyte and the positive electrode active material on the surface of the lithium-transition metal composite oxide. The boron compound refers to a compound including B (boron). The positive electrode active material may contain LiF, Li₂S, and the like in addition to the lithium-transition metal composite oxide.

The lithium-transition metal composite oxide is constituted of at least one of the group consisting of single particles and secondary particles each formed by aggregation of greater than or equal to 2 and less than or equal to 1000 of the single particles. In other words, the lithium-transition metal composite oxide may include single particles, and partially, greater than or equal to 2 and less than or equal to 1000 of the single particles may aggregate to form a secondary particle. The single particle refers to a primary particle having no particle boundary inside the particle.

A proportion of the single particles in the lithium-transition metal composite oxide is preferably greater than or equal to 20%, more preferably greater than or equal to 80%, particularly preferably greater than or equal to 90%, and may be substantially 100% at a mass proportion. The lithium-transition metal composite oxide may include secondary particles each formed by aggregation of more than 100 of the primary particles.

An average particle diameter of the single particles is greater than or equal to 0.5 µm and less than or equal to 5 µm. That is, the lithium-transition metal composite oxide may include: single particles having an average particle diameter of greater than or equal to 0.5 µm and less than or equal to 5 µm; and secondary particles each formed by aggregation of greater than or equal to 2 and less than or equal to 1000 of the single particles having an average particle diameter of greater than or equal to 0.5 µm and less than or equal to 5 µm. The average particle diameter of the single particles is preferably greater than or equal to 0.8 µm and less than or equal to 3 µm. The average particle diameter herein means a median diameter (D50) on a volumetric basis. The D50 means a particle diameter at which a cumulative frequency is 50% from a smaller particle diameter side in a particle size distribution on a volumetric basis. The particle size distributions of the positive electrode active material may be measured by using a laser diffraction-type particle size distribution measuring device (for example, MT3000II, manufactured by MicrotracBEL Corp.) with water as a dispersion medium.

The lithium-transition metal composite oxide contains greater than or equal to 90 mol% of Ni and Mn relative to the total molar amount of the metal elements excluding Li. This can yield a relatively inexpensive lithium-transition metal composite oxide having a high capacity. The lithium-transition metal composite oxide may be constituted of only Ni and Mn.

Ni is preferably contained at the largest amount among the metal elements constituting the lithium-transition metal composite oxide excluding Li. A content rate of Ni in the lithium-transition metal composite oxide is preferably greater than or equal to 50 mol%, and more preferably greater than or equal to 70 mol% relative to the total molar amount of the metal elements excluding Li. An upper limit value of the Ni content rate may be 95 mol%, but preferably 90 mol%.

Mn is preferably contained at the second largest amount next to Ni among the metal elements constituting the lithium-transition metal composite oxide excluding Li. Mn can stabilize a crystal structure of the lithium-transition metal composite oxide. A content rate of Mn in the lithium-transition metal composite oxide is, for example, greater than or equal to 5 mol% and less than or equal to 50 mol% relative to the total molar amount of the metal elements excluding Li.

The lithium-transition metal composite oxide may further contain Fe. A content rate of Fe in the lithium-transition metal composite oxide is, for example, greater than or equal to 0 mol% and less than or equal to 10 mol% relative to the total molar amount of the metal elements excluding Li.

A content rate of Co in the lithium-transition metal composite oxide is preferably less than 0.1 mol% relative to the total molar amount of the metal elements excluding Li. That is, Co is an expensive metal element, and thereby the lithium-transition metal composite oxide preferably contains substantially no Co.

An example of a preferable lithium-transition metal composite oxide is a composite oxide represented by the composition formula Li_{α}NiₓMn_{y}M_{z}O₂, wherein 0.9 ≤ α ≤ 1.2, 0.5 ≤ x ≤ 0.9, 0.05 ≤ y ≤ 0.5, 0 ≤ z ≤ 0.1, and M represents at least one metal element selected from Fe, Cu, Zr, Mg, Ca, W, Si, Cr, Sr, and Ti. The content rates of the metal elements contained in the lithium-transition metal composite oxide are measured by, for example, inductively coupled plasma (ICP) atomic emission spectrometry.

A thickness of the surface-modifying layer formed on the surface of the lithium-transition metal composite oxide is less than or equal to 100 nm. If the thickness of the surface-modifying layer is greater than 100 nm, the battery capacity is deteriorated. The thickness of the surface-modifying layer is preferably less than or equal to 50 nm, and more preferably less than 30 nm. A lower limit of the thickness of the surface-modifying layer is, for example, 1 nm. The surface-modifying layer may be scatteringly present so as to coat at least a part of the surface of the lithium-transition metal composite oxide, or may be present so as to coat an entire surface of the lithium-transition metal composite oxide. From an outermost surface of the surface-modifying layer to a depth of 30 nm, a proportion of a boron atomic concentration is preferably less than or equal to 0.6, and more preferably less than or equal to 0.5 relative to a sum of atomic concentrations of transition metals contained in the lithium-transition metal composite oxide. The atomic concentration of each element may be measured by X-ray photoelectron spectrometry (XPS).

The boron compound in the surface-modifying layer is not particularly limited as long as the compound includes B, and examples thereof include a boron oxide, a boron fluoride, a boron chloride, and a boron sulfide. The boron compound is preferably the boron oxide. The boron oxide is, for example, boric acid (H₃BO₃), boron oxide (B₂O₃), and lithium borate (LiBO₂, LiB₃O₅, or Li₂B₄O₇). The boron compound present on the surface of the lithium-transition metal composite oxide can be confirmed with a low-acceleration SEM, TEM-EDX, or the like.

An amount of the boron compound in the surface-modifying layer is preferably greater than or equal to 0.1 mol% and less than 7 mol% relative to the total molar amount of metal elements excluding Li in the lithium-transition metal composite oxide. Setting the amount of the boron compound to be greater than or equal to 0.1 mol% yields more remarkable effect by the boron compound. If the amount of the boron compound is greater than 7 mol%, resistance of the battery may increase.

The positive electrode active material may include at least one metal element selected from the group consisting of Ca, Sr, Fe, Cu, Zr, Mg, Si, Cr, Ti, and W. These metal elements may be contained in the lithium-transition metal composite oxide, but preferably present on the surface of the lithium-transition metal composite oxide. This configuration can inhibit side reactions between the lithium-transition metal composite oxide and the electrolyte liquid to inhibit deterioration of the battery. These metal elements may be contained in the surface-modifying layer together with B. The positive electrode active material includes these metal elements at preferably greater than or equal to 0 mol% and less than or equal to 5 mol%, and more preferably greater than or equal to 0.01 mol% and less than or equal to 1 mol% relative to a total amount of Ni, Mn, and Fe. The positive electrode active material includes these metal elements at, for example, greater than or equal to 0.05 mol% and less than or equal to 0.2 mol% relative to the total amount of Ni, Mn, and Fe.

Next, an example of a method for manufacturing the positive electrode active material according to the present embodiment will be described. The method for manufacturing the positive electrode active material includes, for example, a synthesizing step, a washing step, a drying step, and an adding step.

In the synthesizing step, a metal hydroxide containing greater than or equal to 90 mol% of Ni and Mn and a Li compound are mixed and calcined to obtain the lithium-transition metal composite oxide.

The metal hydroxide may be obtained by, for example, with stirring a solution of metal salts including Ni, Mn, and optional metal elements (such as Fe), adding dropwise a solution of an alkali such as sodium hydroxide in order to adjust a pH on the alkaline side (for example, greater than or equal to 8.5 and less than or equal to 12.5) to precipitate (coprecipitate). Instead of the metal hydroxide, a metal oxide obtained by thermally treating the metal hydroxide may be used. Since a smaller particle diameter of the metal hydroxide easily grows the primary particles, the particle diameter of the metal hydroxide is preferably less than or equal to 7 µm.

Examples of the Li compound include Li₂CO₃, LiOH, Li₂O₂, Li₂O, LiNO₃, LiNO₂, Li₂SO₄, LiOH·H₂O, LiH, and LiF. A mixing ratio between the metal hydroxide and the Li compound is preferably set so that the mole ratio of the metal elements excluding Li : Li is within a range of, for example, greater than or equal to 1:0.98 and less than or equal to 1:1.1 in terms of easily regulating the above parameters within the specified regions. When the metal hydroxide and the Li compound are mixed, a Ca compound, a Sr compound, a W compound, an Fe compound, a Cu compound, a Zr compound, a Mg compound, a Si compound, a Cr compound, a Ti compound, a S compound, a fluoride, and the like may be added. Examples of the Ca compound include CaO, Ca(OH)₂, and CaCO₃. Examples of the Sr compound include SrO, Sr(OH)₂, and SrCO₃. Examples of the W compound include WO₃, Li₂WO₄, Li₄WO₅, and Li₆W₂O₉. As for the other elements, an oxide, a hydroxide, a sulfide, and a fluoride may be used. The alkali earth metals, W, and Zr have a high effect of reducing the resistance and are useful.

The mixture of the metal hydroxide, the Li compound, and the like are calcined under an oxygen atmosphere (flowing gas with an oxygen concentration of greater than or equal to 80%), for example. The calcining conditions may be conditions such that a heating rate within greater than or equal to 450°C and less than or equal to 680°C is within a range of greater than 1.0 °C/min and less than or equal to 5.5 °C/min, and a highest reaching temperature is within a range of greater than or equal to 700°C and less than or equal to 850°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 30 hours. This calcining step may be a multistep calcination, and a plurality of the first heating rates and the second heating rates may be set in each temperature range as long as the first heating rates and the second heating rates are within the above determined ranges. Regulating the calcining conditions may regulate the particle diameter of the single particles. For example, raising the highest reaching temperature may increase the particle diameter of the single particles.

In the washing step, the lithium-transition metal composite oxide obtained in the synthesizing step is washed with water, and dehydrated to obtain a cake-like composition. The washing with water and the dehydration may be performed by a known method under a known condition, and performed within a range so as not to deteriorate the battery characteristics due to elution of lithium from the lithium-transition metal composite oxide. Into the cake-like composition, a Ca compound, a Sr compound, a W compound, an Fe compound, a Cu compound, a Zr compound, a Mg compound, a Si compound, a Cr compound, a Ti compound, a S compound, a fluoride, and the like may be added.

In the drying step, the cake-like composition obtained in the washing step is dried to obtain a powder composition. The drying step may be performed under a vacuum atmosphere. The drying conditions are, for example, greater than or equal to 150°C and less than or equal to 400°C for greater than or equal to 0.5 hours and less than or equal to 15 hours.

In the adding step, a compound including boron such as, for example, boric acid (H₃BO₃) is added to the powder composition obtained in the drying step, and the temperature is raised to greater than or equal to 200°C and less than or equal to 400°C. This may form the surface-modifying layer containing the boron compound on the surface of the lithium-transition metal composite oxide. The amount of the compound including boron added is, for example, greater than or equal to 0.1 mol% and less than or equal to 7 mol% relative to the total molar amount of the metal elements excluding Li in the lithium-transition metal composite oxide.

### [Negative Electrode]

The negative electrode 12 has a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode 12, such as copper, a film in which such a metal is disposed on a surface layer, or the like may be used. The negative electrode mixture layer includes, for example, a negative electrode active material, a binder, and the like. The negative electrode 12 may be produced by, for example, applying a negative electrode mixture slurry including the negative electrode active material and the binder on the surface of the negative electrode current collector, and drying and then rolling the coating film to form the negative electrode mixture layer on both the surfaces of the negative electrode current collector.

The negative electrode 12 may include boron. A part of boron present on the surface of the positive electrode active material may transfer from the positive electrode 11 to the negative electrode 12. Even if the metal elements such as Ni precipitate on the negative electrode surface, containing B in combination can inhibit deterioration of the battery. The amount of boron included in the negative electrode is preferably greater than or equal to 50 µg, and more preferably greater than or equal to 400 µg and less than or equal to 1200 µg per gram of the positive electrode active material. For example, among the boron added to the positive electrode, greater than or equal to 35% of boron precipitates on the negative electrode, and less than or equal to 55% of boron remains in the positive electrode.

Examples of the negative electrode active material contained in the negative electrode mixture layer include a carbon-based active material that reversibly occludes and releases lithium ions. A preferable carbon-based active material is graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material constituted of at least one of the group consisting of Si and a Si-containing compound may be used, and the carbon-based active material and the Si-based active material may be used in combination.

As the binder contained in the negative electrode mixture layer, fluororesins, PAN, polyimides, acrylic resins, polyolefins, or the like may be used as in the case of the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. Among these, SBR; and CMC or a salt thereof, or PAA or a salt thereof are preferably used in combination. The negative electrode mixture layer may include a conductive agent.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene or polypropylene, cellulose, or the like is preferable. The separator 13 may have a single-layered structure or a stacked structure. On a surface of the separator 13, a resin layer having high heat resistance, such as an aramid resin, and a filler layer including a filler of an inorganic compound may be provided.

### [Non-Aqueous Electrolyte]

The non-aqueous electrolyte includes a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m represent integers of 0 or more}. These lithium salts may be used singly, or as a mixture thereof. Among them, LiPF₆ is preferably used from the viewpoints of ion conductivity, electrochemical stability, and the like. A concentration of the lithium salt is preferably, for example, greater than or equal to 0.8 mol and less than or equal to 1.8 mol per litter of the non-aqueous solvent.

### EXAMPLES

Hereinafter, the present disclosure will be further described with Examples, but the present disclosure is not limited to these Examples.

### <Example 1>

### [Production of Positive Electrode Active Material]

LiOH and Ni_{0.8}Mn_{0.2}(OH)₂ powder obtained by a coprecipitation method and having an average particle diameter of 6 µm were mixed so that a mole ratio between Li and a total amount of Ni and Mn was 1.1:1 to obtain a mixture. Under an oxygen flow (flow rate of greater than or equal to 0.15 L/min and less than or equal to 0.2 L/min relative to 1 L of a capacity of a furnace) with an oxygen concentration of greater than or equal to 90%, this mixture was calcined from room temperature to 650°C for 5 h, then calcined to 850°C for 2 h, and then retained for 9 hours to obtain a lithium-transition metal composite oxide (synthesizing step). Excess lithium in this lithium-transition metal composite oxide was removed by washing with water, and dried to obtain single particles. Into these single particles, boric acid (H₃BO₃) powder was added (adding step). The amount of the boric acid added was 0.2 mol% relative to the total molar amount of the metal elements excluding Li in the lithium-transition metal composite oxide. This mixture was dried to obtain a positive electrode active material of Example 1.

### [Production of Test Cell]

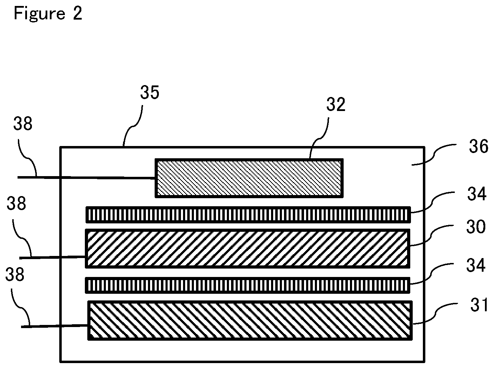

A test cell illustrated in FIG. 2 was produced by the following procedure. First, the above positive electrode active material, acetylene black (conductive agent), and polyvinylidene fluoride (binder) were mixed at 80:10:10 at a weight ratio, and N-methyl-2-pyrrolidone was used for form a slurry. Then, this slurry was applied on an aluminum foil current collector, which was a positive electrode current collector, and dried in vacuo at 110°C to produce a working electrode 30 (positive electrode).

Under dry air with a dewpoint of less than or equal to -50°C, an electrode group in which a separator 34 was interposed between electrodes of the working electrode 30 to which an electrode tab 38 was attached, a counter electrode 31 (negative electrode), and a reference electrode 32 was housed in an exterior 35, then an electrolyte liquid 36 was injected into the exterior 35, and then the exterior 35 was sealed to produce a test cell being a non-aqueous electrolyte secondary battery. Details of each constituent were as follows.
Counter electrode: Lithium metal
Reference electrode: Lithium metal
Separator: Separator made of polyethylene
Non-aqueous electrolyte: A solution in which LiPF₆ was dissolved as an electrolyte salt at a concentration of 1.0 mol/l into a non-aqueous solvent obtained by mixing ethylene carbonate (EC) and ethyl methyl carbonate (EMC) at a volume ratio of 3:7

### [Evaluation of Charge Capacity, Discharge Capacity, and Charge-Discharge Efficiency]

Under an environment temperature at 25°C, the above test cell was charged at a constant current of 0.2 C until 4.5 V (reference to lithium), and then charged at a constant voltage of 4.5 V until 0.02 C. Thereafter, the test cell was discharged at a constant current of 0.1 C until 2.5 V. A charge capacity and a discharge capacity at this time were measured, and this discharge capacity was divided by this charge capacity to calculate charge-discharge efficiency.

### [Evaluation of Cycle Characteristics]

Under an environment temperature at 25°C, the above test cell was charged at a constant current of 0.2 C until 4.2 V, and then charged at a constant voltage of 4.2 V until 0.02 C. Thereafter, the test cell was discharged at a constant current of 0.1 C until 2.5 V. This charge and discharge was specified as one cycle, the measurement was performed under the above conditions at the 11th cycle, the 21st cycle, and the 31st cycle, and the charge and discharge were performed in the same manner as above at the other cycles except that the constant current during the discharge was changed to 0.2 C. A capacity retention was determined by the following formula. Capacity retention = (Discharge capacity at 31st cycle / Discharge capacity at 1st cycle) × 100

### <Examples 2 to 8 and Comparative Examples 1 to 4>

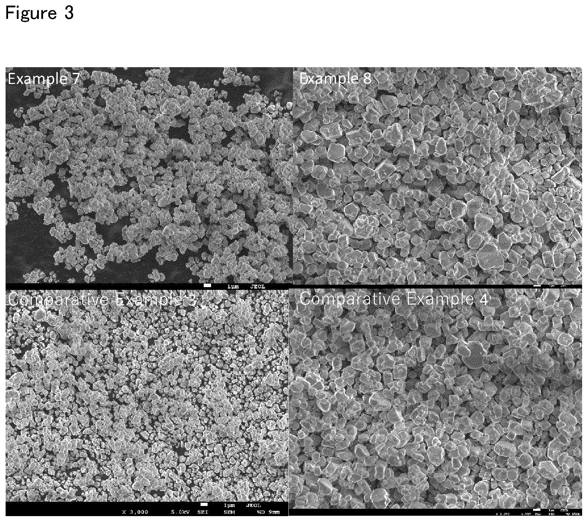

Test cells were produced and evaluated in the same manner as in Example 1 except that, in the production of the positive electrode active material, the mole ratio between Li and the total amount of Ni and Mn, the amount of boric acid added, the highest temperature in calcining, and the calcining time were changed as described in Table 1. With the particle size distribution measurement, the average particle diameter (D50) in Example 7 and Comparative Example 3 was 1.0 µm, and the average particle diameter (D50) in Example 8 and Comparative Example 4 was 1.8 µm. SEM images of the positive electrode active materials of Examples 7 and 8 and Comparative Examples 3 and 4 indicate a single-particle shape having no particle boundary in the particle, as illustrated in FIG. 3. An aggregate of the single particles was partially observed, and observed was tendency of aggregating the small particles in Example 7 with the boron treatment.

### <Example 9 and Comparative Example 5>

Test cells were produced and evaluated in the same manner as in Example 1 except that, in the production of the positive electrode active material, the amount of boric acid added was changed as described in Table 1, and the water-washing step was emitted.

### <Examples 10 and 11 and Comparative Examples 6 and 7>

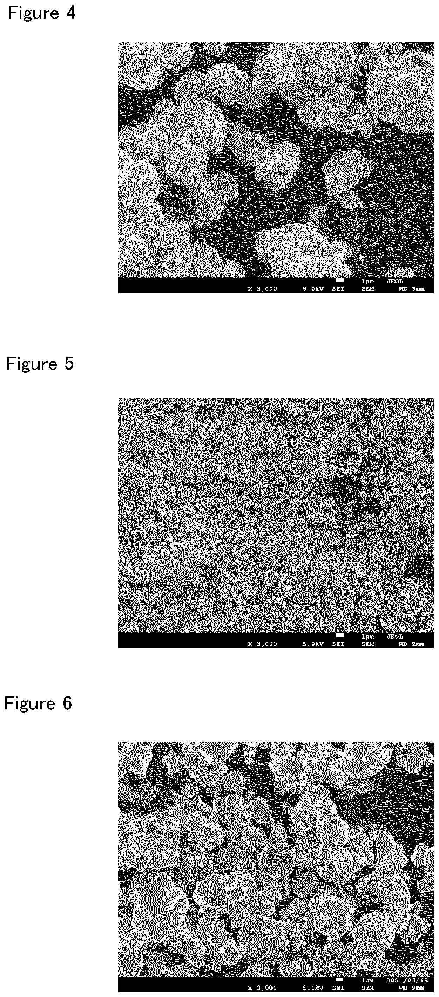

Test cells were produced and evaluated in the same manner as in Example 1 except that, in the production of the positive electrode active material, the amount of boric acid added, the highest temperature in calcining, and the calcining time were changed as described in Table 1, and the water-washing step and the crushing step were omitted. In Examples 10 and 11 and Comparative Examples 6 and 7, an aggregate of the single particles having an average particle diameter (D50) of 9.0 µm was obtained. An SEM image of the positive electrode active material of Example 10 indicates a shape of the secondary particles, not the single-particle shape, as indicated in FIG. 4, but crushing the particles with a jet mill yields the shape in the SEM image of Example 1 (FIG. 5), which includes large primary particles and has the feature of the single particles. The particle diameter of the primary particles is found by crushing the particles with a jet mill and measuring the average particle diameter. An SEM image of the positive electrode active material of Example 11 indicates a single-particle shape having no particle boundary in the particle, as illustrated in FIG. 6, and the aggregation of the primary particles disappears even without crushing as largely growing of the particles.

### <Example A1>

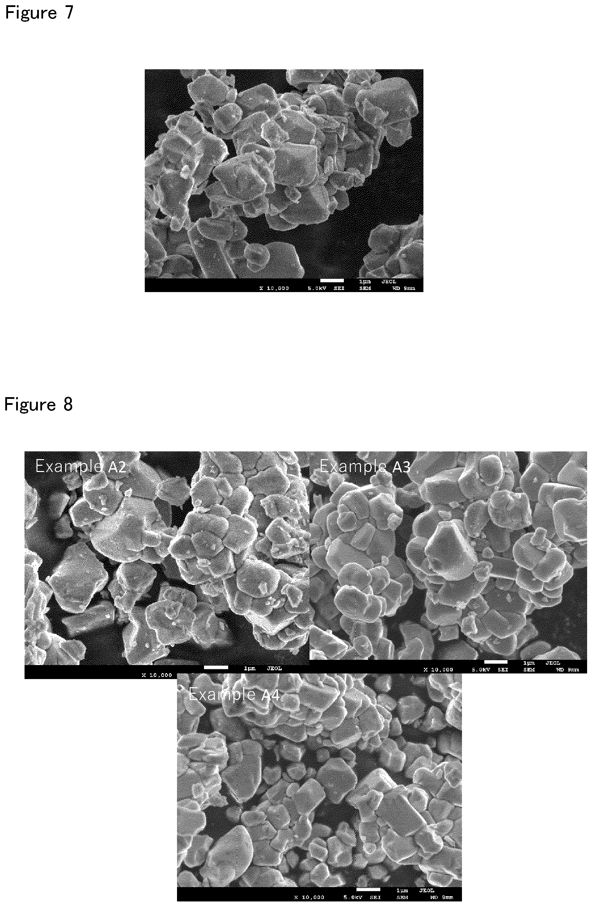

LiOH and Ni_{0.85}Mn_{0.15}(OH)₂ powder obtained by a coprecipitation method and having an average particle diameter of 5 µm were mixed so that a mole ratio between Li and a total amount of Ni and Mn was 1.1:1 to obtain a mixture (the mixing process). Under an oxygen flow (flow rate of greater than or equal to 0.15 L/min and less than or equal to 0.2 L/min relative to 1 L of a capacity of a furnace) with an oxygen concentration of greater than or equal to 90%, this mixture was calcined from room temperature to 650°C for 5 h, then calcined to 875°C for 2 h, and then retained for 12 hours to obtain a lithium-containing composite oxide (aggregate of single particles) (synthesizing step). Thereafter, (H₃BO₃) was added to this lithium-containing composite oxide (adding step). An amount of boric acid added was 1 mol% relative to a total molar amount of the metal elements excluding Li in the lithium-transition metal composite oxide. This mixture was dried to obtain a positive electrode active material of Example A1. A test cell was produced and evaluated in the same manner as in Example 1 except that this positive electrode active material was used. FIG. 7 shows the SEM image.

### <Examples A2 to A17 and Reference Examples B1 to B8>

Test cells were produced and evaluated in the same manner as in Example 1 except that, in the production of the positive electrode active material, an element addition species at an amount described in Table 2 relative to the total amount of Ni and Mn was mixed in the mixing process, and addition of boric acid, the highest temperature in calcining, and the calcining time were changed as described in Table 2. CuO was used as the Cu source, ZrO₂ was used as the Zr source, CuO was used as Cu, Mg(OH)₂ was used as the Mg source, Ca(OH)₂ was used as the Ca source, WO₃ was used as the W source, SiO was used as the Si source, LiF was used as the F source, and Li₂S was used as the S source. From the SEM image (FIG. 8) of the positive electrode active materials of Examples A2, A3, and A4, it may be confirmed that the single-particle shape largely grows as raising the calcining temperature.

### <Reference Example C1>

LiOH and Ni_{0.85}Co_{0.05}Mn_{0.10}(OH)₂ powder obtained by a coprecipitation method and having an average particle diameter of 6 µm were mixed so that a mole ratio between Li and a total amount of Ni, Co, and Mn was 1:1.05 to obtain a mixture. Under an oxygen flow (flow rate of greater than or equal to 0.15 L/min and less than or equal to 0.2 L/min relative to 1 L of a capacity of a furnace) with an oxygen concentration of greater than or equal to 90%, this mixture was calcined from room temperature to 650°C for 5 h, then calcined to 750°C for 2 h, and then retained for 3 hours to obtain a lithium-containing composite oxide (synthesizing step). This lithium-containing composite oxide was of secondary particles each formed by aggregation of single particles, and this lithium-containing composite oxide was used as a positive electrode active material of Reference Example 1. A test cell was produced and evaluated in the same manner as in Example 1 except that this positive electrode active material was used.

### <Reference Example C2>

A test cell was produced and evaluated in the same manner as in Reference Example 1 except that, after the synthesizing step of the production of the positive electrode active material, boric acid (H₃BO₃) powder was added to the secondary particles, and dried to obtain the positive electrode active material. The amount of the boric acid added was 1 mol% relative to the total molar amount of the metal elements excluding Li in the lithium-transition metal composite oxide.

### <Reference Example C3>

A test cell was produced and evaluated in the same manner as in Reference Example 1 except that, in the production of the positive electrode active material, the metal hydroxide being the raw material was changed to Ni_{0.83}Co_{0.12}Mn_{0.05}(OH)₂ powder having an average particle diameter of 11 µm.

### <Reference Example C4>

A test cell was produced and evaluated in the same manner as in Reference Example 3 except that, after the synthesizing step of the production of the positive electrode active material, boric acid (H₃BO₃) powder was added to the secondary particles, and dried to obtain the positive electrode active material. The amount of the boric acid added was 1 mol% relative to the total molar amount of the metal elements excluding Li in the lithium-transition metal composite oxide.

### <Reference Example C5>

A test cell was produced and evaluated in the same manner as in Reference Example 1 except that, in the production of the positive electrode active material, the metal hydroxide being the raw material was changed to Ni_{0.85}Co_{0.05}Mn_{0.10}(OH)₂ powder having an average particle diameter of 12 µm.

### <Reference Example C6>

A test cell was produced and evaluated in the same manner as in Reference Example 5 except that, after the synthesizing step of the production of the positive electrode active material, boric acid (H₃BO₃) powder was added to the secondary particles, and dried to obtain the positive electrode active material. The amount of the boric acid added was 1 mol% relative to the total molar amount of the metal elements excluding Li in the lithium-transition metal composite oxide.

The positive electrode active materials obtained in Example 4, Example 5, Comparative Example 1, and Comparative Example 3 were subjected to XPS measurement under the following conditions at each position on the outermost surface (0 nm in depth), 1 nm in depth, 3 nm in depth, 5 nm in depth, 10 nm in depth, 20 nm in depth, 30 nm in depth, 50 nm in depth, 70 nm in depth, and 100 nm in depth. FIG. 4A to FIG. 4D show the XPS spectra of Example 4, Example 5, Comparative Example 1, and Comparative Example 2, respectively. The measurement at each depth was performed by digging the positive electrode active material from the outermost surface using a focused ion beam apparatus (FIB).
Apparatus: PHI Quantera SXM, manufactured by ULVAC PHI, Inc.
X-ray source: Al-mono (1486 eV, positive electrode: 20 kV / 100 W)
Photoelectron take-off angle: 45°
Neutralization: electron gun and floating ion in combination
Etching condition: Ar ion gun (acceleration voltage: 2 kV)
Measurement conditions:
   Path energy, 55.0 eV
   Step, 0.05 eV (outermost surface) and 0.20 eV (depth direction)
   Index of depth removed by Ar ion sputtering was in terms of SiO₂.

The outermost surface was in a state where Ar ion sputtering was not performed.

The atomic concentration was calculated from a signal intensity ratio by using a relative sensitivity coefficient of each element.
Analysis: average information of 300×800 µm

### [Evaluation of Charge Capacity, Discharge Capacity, and Charge-Discharge Efficiency]

Under an environment temperature of 25°C, the above test cell was charged at a constant current of 0.2 C until 4.5 V (reference to lithium), and then charged at a constant voltage of 4.5 V until 0.02 C. Thereafter, the test cell was discharged at a constant current of 0.1 C until 2.5 V. A charge capacity and a discharge capacity at this time were measured, and this discharge capacity was divided by this charge capacity to calculate charge-discharge efficiency.

### [Evaluation of Cycle Characteristics]

Under an environment temperature of 25°C, the above test cell was charged at a constant current of 0.2 C until 4.2 V, and then charged at a constant voltage of 4.2 V until 0.02 C. Thereafter, the test cell was discharged at a constant current of 0.1 C until 2.5 V. This charge and discharge was specified as one cycle, the measurement was performed under the above conditions at the 11th cycle, the 21st cycle, and the 31st cycle, and the charge and discharge were performed in the same manner as above at the other cycles except that the constant current during the discharge was changed to 0.2 C. A capacity retention was determined by the following formula. Capacity retention = (Discharge capacity at 31st cycle / Discharge capacity at 1st cycle) × 100

### [Evaluation of IV Resistance]

Under an environment temperature at 25°C, the above test cell after the 11th cycle and the 31st cycle was charged at a constant current of 0.2 C until SOC 50%, and from this state, the test cell was discharged at a current value of each of 0.05 C, 0.1 C, and 0.2 C for 10 seconds. A voltage value after the discharge for 10 seconds relative to each of the current values was plotted, and an IV resistance was determined from a slope of linear approximation of the plot. The IV resistance after the 11th cycle was specified as an initial IV resistance, and the IV resistance after the 31st cycle was specified as an IV resistance after cycles.

Tables 1 to 3 show the evaluation results of Examples, Comparative Examples, and Reference Examples.

**[Table 1]**

| | Composition of lithium-transition metal composite oxide [mol%] | | Amount of boric acid added [mol%] | Highest temperature in calcining [°C] | Calcining time [hr]] | D50 [µm] | Charge capacity [mAh/g] | Discharge capacity [mAh/g] | Charge -discharge efficienc y [%] | Thickness: 30 µm | | | Capacity retention [%] | Initial IV resistance [Ω] | IV resistance after cycles [Ω] |
|---|---|---|---|---|---|---|---|---|---|---|---|---|---|---|---|
| | Ni | Mn | | | | | | | | B | Mn +Ni | B/(Mn +Ni) | | | |
| Example 1 | 80 | 20 | 0.2 | 850 | 9 | 0.9 | 238 | 217 | 91 | <1 | 30 | - | 89 | 3 | 7 |
| Example 2 | 80 | 20 | 0.5 | 850 | 9 | | 235 | 218 | 93 | <1 | 32 | - | 88 | 3 | 6 |
| Example 3 | 80 | 20 | 1 | 850 | 9 | | 237 | 217 | 92 | 3 | 28 | 0.11 | 89 | 3 | 6 |
| Example 4 | 80 | 20 | 2 | 850 | 9 | | 238 | 225 | 94 | 5 | 24 | 0.21 | 93 | 3 | 5 |
| Example 5 | 80 | 20 | 3 | 850 | 9 | | 233 | 215 | 92 | 6 | 27 | 0.22 | 91 | 3 | 6 |
| Example 6 | 80 | 20 | 5 | 850 | 9 | | 228 | 208 | 92 | 11 | 22 | 0.50 | 90 | 3 | 6 |
| Example 7 | 80 | 20 | 2 | 850 | 12 | 1.0 | 241 | 221 | 92 | | | | 89 | 3 | 6 |
| Example 8 | 80 | 20 | 2 | 880 | 12 | 1.8 | 240 | 219 | 91 | | | | 93 | 3 | 7 |
| Example 9 | 80 | 20 | 1 | 850 | 9 | 1.0 | 235 | 215 | 92 | | | | 89 | 3 | 6 |
| Example 10 | 80 | 20 | 1 | 850 | 9 | 9.0 | 236 | 213 | 90 | | | | 90 | 3 | 6 |
| Example 11 | 80 | 20 | 1 | 925 | 12 | | 231 | 193 | 83 | | | | 89 | 5 | 7 |
| Comparative Example 1 | 80 | 20 | 7 | 850 | 9 | | 223 | 203 | 91 | 12 | 19 | 0.63 | 89 | 3 | 6 |
| Comparative Example 2 | 80 | 20 | 0 | 850 | 9 | 0.9 | 237 | 207 | 87 | | | | 81 | 3 | 9 |
| Comparative Example 3 | 80 | 20 | 0 | 850 | 12 | 1.0 | 237 | 207 | 87 | | | | 77 | 4 | 16 |
| Comparative Example 4 | 80 | 20 | 0 | 880 | 12 | 1.8 | 236 | 203 | 86 | | | | 72 | 6 | 24 |
| Comparative Example 5 | 80 | 20 | 0 | 850 | 9 | 1.0 | 236 | 205 | 87 | <1 | 30 | - | 84 | 3 | 7 |
| Comparative | 80 | 20 | 0 | 850 | 9 | 9.0 | 233 | 206 | 89 | | | | 87 | 5 | 9 |
| Example 6 | | | | | | | | | | | | | | | |
| Comparative Example 7 | 80 | 20 | 0 | 925 | 12 | 0.9 | 230 | 182 | 79 | | | | 81 | 5 | 7 |

**[Table 2]**

| | Composition of lithium -transition metal composite oxide [mol%] | | | Amount of boric acid added [mol%] | Highest temperature in calcining [°C] | Calcining time [hr]] | D50 [µm] | Charge capacity [mAh/g] | Discharge capacity [mAh/g] | Charge -discharge efficiency [%] | Capacity retention [%] | Initial IV resistance [Ω] | IV resistance after cycles [Ω] |
|---|---|---|---|---|---|---|---|---|---|---|---|---|---|
| | Ni | Mn | Additive element | | | | | | | | | | |
| Reference Example B1 | 85 | 15 | | 1 | 875 | 12 | | 238 | 200 | 84 | 82 | - | - |
| Example A1 | 85 | 15 | | 1 | 875 | 12 | | 237 | 206 | 87 | 85 | - | - |
| Reference Example B2 | 85 | 15 | Ca 0.1 | 1 | 875 | 12 | | 240 | 203 | 85 | 84 | - | - |
| Example A2 | 85 | 15 | Ca 0.1 | 1 | 875 | 12 | | 241 | 207 | 86 | 88 | - | - |
| Reference Example B3 | 85 | 15 | 0 | 0 | 850 | 12 | | 237 | 205 | 86 | 82 | 4 | 6 |
| Example A3 | 85 | 15 | 0 | 1 | 850 | 12 | | 243 | 215 | 88 | 90 | 3 | 6 |
| Reference Example B4 | 85 | 15 | Ca 0.05 | 0 | 850 | 12 | | 239 | 207 | 87 | 82 | 3 | 6 |
| Example A4 | 85 | 15 | Ca 0.05 | 1 | 850 | 12 | | 243 | 215 | 89 | 90 | 4 | 6 |
| Reference Example B5 | 85 | 15 | Ca 0.1 | 0 | 850 | 12 | | 242 | 208 | 86 | 81 | 4 | 6 |
| Example A5 | 85 | 15 | Ca 0.1 | 1 | 850 | 12 | | 244 | 216 | 89 | 91 | 4 | 6 |
| Reference Example B6 | 85 | 15 | W 0.05 | 0 | 850 | 12 | | 241 | 205 | 85 | 81 | 4 | 6 |
| Example A6 | 85 | 15 | W 0.05 | 1 | 850 | 12 | | 244 | 215 | 88 | 88 | 4 | 6 |
| Reference | 85 | 15 | W 0.1 | 0 | 850 | 12 | | 241 | 207 | 86 | 83 | 4 | 6 |
| Example B7 | | | | | | | | | | | | | |
| Example A7 | 85 | 15 | W 0.1 | 1 | 850 | 12 | | 243 | 216 | 89 | 89 | 4 | 5 |
| Example A8 | 85 | 15 | - | 1 | 800 | 12 | | 241 | 217 | 90 | 91 | 3 | 5 |
| Reference Example B8 | 85 | 15 | - | 0 | 800 | 12 | | 242 | 215 | 89 | 82 | 3 | 6 |
| Example A9 | 85 | 15 | Cu 0.05 | 1 | 800 | 12 | | 242 | 217 | 90 | 90 | 3 | 4 |
| Example A10 | 85 | 15 | Zr 0.05 | 1 | 800 | 12 | | 241 | 217 | 90 | 91 | 2 | 4 |
| Example A11 | 85 | 15 | Mg 0.05 | 1 | 800 | 12 | | 240 | 219 | 91 | 92 | 3 | 5 |
| Example A12 | 85 | 15 | Ca 0.05 | 1 | 800 | 12 | | 241 | 216 | 90 | 92 | 3 | 4 |
| Example A13 | 85 | 15 | W 0.05 | 1 | 800 | 12 | | 242 | 216 | 89 | 90 | 3 | 5 |
| Example A14 | 85 | 15 | Si 0.05 | 1 | 800 | 12 | | 241 | 219 | 91 | 91 | 3 | 5 |
| Example A15 | 85 | 15 | LiF 0.05 | 1 | 800 | 12 | | 241 | 219 | 91 | 91 | 2 | 5 |
| Example A16 | 85 | 15 | Li₂S 0.05 | 1 | 800 | 12 | | 242 | 218 | 90 | 91 | 2 | 5 |

**[Table 3]**

| | Composition of lithium -transition metal composite oxide [mol%] | | | Average particle diameter of raw material [µm] | Amount of boric acid added [mol%] | Charge capacity [mAh/g] | Discharge capacity [mAh/g] | Charge -discharge efficiency [%] | Capacity retention [%] | Initial IV resistance [Ω] | IV resistance after cycles [Ω] |
|---|---|---|---|---|---|---|---|---|---|---|---|
| | Ni | Co | Mn | | | | | | | | |
| Reference Example C1 | 85 | 5 | 10 | 6 | 0 | 246 | 214 | 87 | 66 | 2 | 6 |
| Reference Example C2 | 85 | 5 | 10 | 6 | 1 | 246 | 214 | 87 | 94 | 2 | 5 |
| Reference Example C3 | 83 | 12 | 5 | 11 | 0 | 246 | 220 | 89 | 88 | 2 | 4 |
| Reference Example C4 | 83 | 12 | 5 | 11 | 1 | 239 | 220 | 92 | 94 | 2 | 4 |
| Reference Example C5 | 85 | 5 | 10 | 12 | 0 | 247 | 213 | 86 | 74 | 2 | 7 |
| Reference Example C6 | 85 | 5 | 10 | 12 | 1 | 242 | 211 | 87 | 95 | 3 | 6 |

In Table 1, the test cells of Examples yielded higher charge-discharge efficiency and capacity retention than those of the test cells of Comparative Examples. Accordingly, it is found that the battery at a low cost and having improved battery capacity and charge-discharge efficiency may be obtained by forming the surface-modifying layer including the boron compound at the predetermined thickness on the surface of the lithium-transition metal composite oxide having the predetermined composition. From the results of Examples 7 and 8 and Comparative Examples 3 and 4, it is found that decrease in the discharge capacity may be inhibited to improve the charge-discharge efficiency by performing the boron treatment even with enlarged primary particles.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30 Working electrode (positive electrode), 31 Counter electrode (negative electrode), 32 Reference electrode, 34 Separator, 35 Exterior, 36 Electrolyte liquid, 38 Electrode tab

## Claims

1. A positive electrode active material for a non-aqueous electrolyte secondary battery, including a lithium-transition metal composite oxide containing greater than or equal to 90 mol% of Ni and Mn relative to a total molar amount of metal elements excluding Li, wherein
the lithium-transition metal composite oxide is constituted of at least one of the group consisting of single particles and secondary particles each formed by aggregation of greater than or equal to 2 and less than or equal to 1000 of the single particles,
an average particle diameter of the single particles is greater than or equal to 0.5 µm and less than or equal to 5 µm,
a surface-modifying layer including a boron compound is formed on a surface of the lithium-transition metal composite oxide, and
a thickness of the surface-modifying layer is less than or equal to 100 nm.

2. The positive electrode active material for a non-aqueous electrolyte secondary battery according to claim 1, wherein, from an outermost surface of the surface-modifying layer to a depth of 30 nm, a proportion of a boron atomic concentration is less than or equal to 0.6 relative to a sum of atomic concentrations of transition metals contained in the lithium-transition metal composite oxide.

3. The positive electrode active material for a non-aqueous electrolyte secondary battery according to claim 1 or 2, wherein the lithium-transition metal composite oxide further contains Fe.

4. The positive electrode active material for a non-aqueous electrolyte secondary battery according to any one of claims 1 to 3, wherein a content rate of Co in the lithium-transition metal composite oxide is less than 0.1 mol% relative to the total molar amount of metal elements excluding Li.

5. The positive electrode active material for a non-aqueous electrolyte secondary battery according to any one of claims 1 to 4, wherein the boron compound is a boron oxide.

6. The positive electrode active material for a non-aqueous electrolyte secondary battery according to any one of claims 1 to 5, wherein an amount of the boron compound in the surface-modifying layer is greater than or equal to 0.1 mol% and less than or equal to 7 mol% relative to the total molar amount of metal elements excluding Li in the lithium-transition metal composite oxide.

7. The positive electrode active material for a non-aqueous electrolyte secondary battery according to any one of claims 1 to 6, further including at least one selected from the group consisting of metal elements of Ca, Sr, Fe, Cu, Zr, Mg, Si, Cr, Ti, and W, sulfur, and a fluoride.

8. A non-aqueous electrolyte secondary battery, comprising:
a positive electrode including the positive electrode active material for a non-aqueous electrolyte secondary battery according to any one of claims 1 to 7;
a negative electrode; and
a non-aqueous electrolyte.

9. The non-aqueous electrolyte secondary battery according to claim 8, wherein the negative electrode includes B.
